# NOUVEAU FASCICULE DE BREVET EUROPEEN

(11) **EP 1 550 604 B2**
(45) Date de publication et mention de la décision concernant l'opposition: **09.09.2015**
(45) Mention de la délivrance du brevet: 02.04.2008
(21) Numéro de dépôt: 04293164.2
(22) Date de dépôt: 29.12.2004
(51) Int. Cl.: B62D 65/00, B62D 25/16, B62D 25/10

(54) **Procédé de fabrication d'une pièce de structure de véhicule automobile, pièce de structure, traverse de face avant technique et poutre de pare-chocs**
Produktionsverfahren für ein Strukturteil eines Kraftfahrzeuges, Strukturteil, Querträger für ein Frontteil und Träger für einem Stossfänger
Production method for a structural vehicle part, structural vehicle part, transversal beam for front module, beam for bumper

(30) Priorité: 02.01.2004 FR 0400013
(43) Date de publication de la demande: 06.07.2005
(73) Titulaire: COMPAGNIE PLASTIC OMNIUM, 69007 Lyon (FR)
(72) Inventeur: Andre, Gérald, 01500 Amberieu en Bugey (FR); Bonneau, Eric, 38460 Saint Romain des Jalionas (FR); Cheron, Hugues, 01800 Meximieux (FR); Lacroix, Thibault, 01500 Chateau-Gaillard (FR)
(74) Mandataire: Remy, Vincent Noel Paul

(56) Documents cités:
- WO-A-02/074608
- DE-A1- 4 109 397
- DE-C- 19 934 545
- FR-A- 2 793 438
- US-B1- 6 421 979

## Description

La présente invention concerne un procédé de fabrication d'une pièce de structure de véhicule automobile, une pièce de structure, une traverse de face avant technique et une poutre de pare-chocs.

Les exigences actuelles dans le domaine de l'automobile amènent les constructeurs à utiliser des pièces de structure à la fois rigides, pour augmenter la sécurité des passagers, et légères, pour limiter le poids et donc le coût d'utilisation du véhicule.

On connaît déjà, dans l'état de la technique, une telle pièce de structure, telle qu'une poutre de pare-chocs, qui combine la rigidité des matériaux métalliques et la légèreté des matériaux plastiques. Pour cela, une telle poutre « hybride » est constituée d'une tôle emboutie, assemblée avec un élément de stabilisation mécanique en matière thermoplastique, tel qu'un ensemble de nervures de rigidification.

Un exemple de pièce de structure comprenant une tôle d'acier, éventuellement munie d'un agent d'adhérence, remplie de matière thermoplastique, est décrit dans FR 2 793 438.

Généralement, la matière plastique et la tôle sont solidarisées par des liaisons traversantes, qui peuvent être constituées par des portions de matière plastique, obtenues par surmoulage de cette dernière sur la tôle, comme dans EP 0370342 et FR 2781713, ou par encliquetage, comme dans FR 2800030.

Le problème de ce type de poutre consiste en ce que l'assemblage de la tôle avec la matière plastique nécessite de faire des orifices traversants dans l'un des deux matériaux. Ces orifices fragilisent la tôle ou l'élément de stabilisation en matière plastique, d'autant plus que la liaison entre la tôle et la matière plastique se fait de façon ponctuelle.

Une solution pourrait être de coller l'élément de stabilisation en matière plastique sur la tôle, de façon à obtenir une liaison continue. Cependant, cette méthode n'est pas pratiquée en raison de la difficulté à atteindre l'intérieur de la tôle emboutie et des coûts additionnels de mise en place de la colle à des endroits précis.

La présente invention vise à remédier à ces inconvénients en proposant un procédé de fabrication d'une pièce de structure de véhicule automobile, dans lequel le métal et la matière plastique sont assemblés sans faire de trou dans la nappe métallique ou dans la matière thermoplastique, tout en simplifiant cet assemblage.

A cet effet, l'invention a pour objet un procédé de fabrication d'une pièce de structure de véhicule automobile selon la revendication 1.

Ainsi, un tel procédé permet d'obtenir une pièce de structure hybride dans laquelle ni la nappe métallique ni l'élément de stabilisation ne sont percés. De plus, grâce au revêtement de surface, la liaison entre la nappe métallique et l'élément de stabilisation en matière plastique est continue, donc meilleure.

Par élément de stabilisation, on entend un élément permettant de limiter les contraintes supportées par la nappe métallique lors de sollicitations de flexion ou de torsion. L'élément de stabilisation peut par exemple comprendre une nervure de rigidification, ou une couche de matière plastique.

Selon l'invention, la mise en forme de la nappe métallique comprend une étape de pliage ou d'emboutissage.

Eventuellement, on rapporte la matière thermoplastique par surmoulage de la nappe pré-enduite. Ainsi, contrairement au cas des liaisons traversantes qui imposent pour chaque point de liaison une quantité de matière thermoplastique minimale à la tenue de la liaison, le procédé selon l'invention permet d'apporter une quantité de matière exactement suffisante à la stabilisation mécanique de la nappe métallique, à un endroit précis, et ce à faible coût.

le revêtement de surface est réalisé dans un matériau réactivable, de préférence à chaud. Ainsi, ce matériau ne réagit qu'à une certaine température, telle que la température à laquelle est injectée la matière thermoplastique de la nervure de rigidification, ce qui permet de mettre la nappe métallique en forme sans que le revêtement de surface ne se lie aux outils de mise en forme.

Selon un premier mode de mise en oeuvre, l'enduction préalable de la nappe métallique avec le revêtement de surface est exécutée séparément, dès la fabrication de la nappe métallique, par exemple sous la forme d'une tôle. La tôle pré-enduite est ultérieurement mise en forme et la matière thermoplastique est rapportée sur la tôle pré-enduite mise en forme conformément à l'invention.

Selon un second mode de mise en oeuvre, l'enduction préalable est exécutée immédiatement avant la mise en forme de la nappe.

La nappe métallique enduite du revêtement de surface comporte une plage, dite plage libre, non couverte par l'élément de stabilisation en matière thermoplastique. Cette plage libre sert d'interface de liaison avec un autre composant que l'élément de stabilisation. Ainsi, il est possible, en réactivant à nouveau la plage libre, de la faire réagir de façon que le revêtement de surface puisse servir de moyen de fixation d'autres composants, tels que des composants fixés en option selon le véhicule. De plus, le revêtement de surface réactivable et l'élément de stabilisation comportent un produit commun.

Une pièce de structure selon l'invention peut en outre comporter l'une ou plusieurs des caractéristiques suivantes :
- le revêtement de surface comporte un produit liant et, du côté opposé à la nappe métallique, un film en matière thermoplastique réalisé dans le même matériau que l'élément de stabilisation, de façon à favoriser l'adhérence de l'élément de stabilisation sur le revêtement de surface ;
- l'élément de stabilisation est en polypropylène ou polyamide ; et
- le revêtement de surface comporte du polypropylène ou du polyamide.

L'invention concerne également une pièce de structure de véhicule automobile obtenue par mise en oeuvre d'un procédé du type précité, par exemple une traverse de face avant technique ou une poutre de pare-chocs.

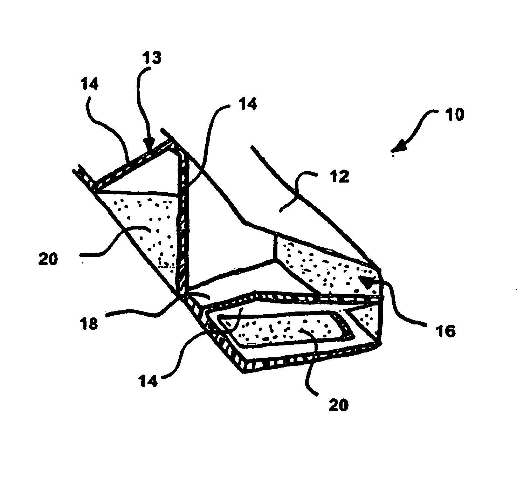

L'invention sera mieux comprise à la lecture de la description qui va suivre, donnée uniquement à titre d'exemple et faite en se référant à la figure unique annexée, représentant une vue en perspective d'une partie d'une pièce de structure selon l'invention.

La pièce de structure représentée sur la figure unique est une poutre 10 de pare-chocs avant ou arrière. Cette poutre 10 comporte une nappe métallique 12, de section en U, réalisée par emboutissage d'une tôle.

La poutre 10 comporte également, à l'intérieur de la nappe en U, un élément de stabilisation 13, réalisé dans un matériau thermoplastique tel que le polypropylène, destiné à limiter les contraintes supportées par la nappe métallique 12 lors de sollicitations en flexion ou en torsion. L'élément de stabilisation 13 représenté sur la figure comporte à la fois des nervures de rigidification 14, traversant l'intérieur de la nappe 12, et des zones de stabilisation 18, agencées en surépaisseur à l'intérieur de la nappe 12.

Selon d'autres mode de réalisation, l'élément de stabilisation en matière thermoplastique est composé uniquement de nervures de rigification, ou uniquement par une couche en surépaisseur, uniforme ou non.

Grâce aux deux composants 12 et 13, réalisés dans un matériau différent, la poutre 10 offre une bonne inertie et une bonne résistance à la torsion, tout en étant suffisamment légère.

Pour lier la nappe 12 et l'élément de stabilisation 13, la nappe est recouverte par un revêtement de surface 16, servant d'interface de liaison mécanique avec l'élément 13.

Le revêtement de surface 16 est réalisé dans un matériau qui présente les caractéristiques suivantes :
- Il est thermo-réactif, c'est-à-dire qu'il acquiert des propriétés d'adhérence à une certaine température ;
- Il est apte à coller des matériaux métalliques, comme les colles connues dans l'état de la technique, pour coller des pièces de structure métalliques, telles que le capot et la doublure de capot, ou le hayon et la doublure de hayon, vendues notamment par la société Henkle ;
- Il contient du polypropylène.

L'assemblage de la nappe métallique 12 et de l'élément de stabilisation 13 s'effectue de la façon suivante.

Dans une première étape, la nappe métallique est pré-enduite, au moins sur toute sa surface intérieure, du revêtement de surface 16. Cette première étape est réalisée dès la fabrication de la tôle, avant sa commercialisation.

Dans une deuxième étape, la nappe 12, pré-enduite du revêtement 16, est découpée et conformée par emboutissage ou pliage, afin de prendre la forme à section en U représentée sur le dessin.

Dans une troisième étape, la tôle ainsi préparée est placée dans un moule dans lequel est injecté du polypropylène de façon à former les nervures 14 en matière plastique ainsi que les zones de stabilisation 18.

Lors de ce surmoulage, le polypropylène est injecté à une température relativement élevée, de façon qu'il soit liquide. Cette température est par ailleurs suffisamment élevée pour faire réagir le matériau composant la couche d'interface 16.

Par ailleurs, comme le matériau du revêtement de surface 16 comporte du polypropylène, celui-ci est compatible avec le polypropylène injecté pour mouler l'élément 13.

Par conséquent, lorsque le polypropylène entre en contact, dans le moule, avec le revêtement de surface 16, celui-ci réagit, de façon à créer une liaison entre l'élément 13 et la nappe métallique 12.

Ainsi, comme on le voit sur la poutre 10 obtenue après l'injection, on obtient les zones de stabilisation 18 dans lesquelles la couche d'interface 16 et la matière thermoplastique injectée ont fusionné de façon à assurer une liaison continue de la matière plastique et de la nappe métallique 12, et donc à stabiliser la nappe 12.

Eventuellement, selon un mode de réalisation non représenté, le revêtement de surface 16 est recouvert, avant le surmoulage, d'un film de polypropylène, de façon à favoriser l'accroche du polypropylène composant les nervures de rigidification sur la nappe métallique.

Par ailleurs, on peut voir que, comme la nappe 12 est pré-enduite sur toute la surface du revêtement 16, certaines plages non couvertes par la matière plastique lors de l'injection n'ont pas réagi et ne sont pas recouvertes par la matière plastique. Par conséquent, ces plages 20 restées libres, comportant le revêtement de surface 16, peuvent être réactivées à la chaleur, de façon à pouvoir fixer un composant sur la pièce de structure, tel qu'un guide d'air, des pattes de fixation (pour les pièces fixées en option sur le véhicule), un avertisseur sonore...

On notera que l'invention n'est pas limitée au mode de réalisation précédemment décrit.

Notamment, l'obtention d'une liaison entre la matière plastique et la nappe métallique 12 ne se fait pas uniquement par surmoulage, elle peut également se faire par assemblage.

Enfin, une pièce de structure telle que décrite peut être utilisée dans le véhicule pour d'autres pièces que la poutre 10, par exemple une traverse de face avant technique, un jambage, un longeron, une pièce de structure de toit, un appui-bas pour piéton, un montant de baie, un support d'auvent, une traverse de baie, un bas-volet.

## Revendications

1. Procédé de fabrication d'une pièce de structure (10) de véhicule automobile, comportant une nappe métallique (12), stabilisée par un élément (13) de stabilisation mécanique en matière thermoplastique, **caractérisé en ce qu'**il comporte les étapes suivantes :
- on met en forme la nappe métallique (12) préalablement enduite d'un revêtement de surface (16) réactivable servant d'interface de liaison mécanique avec la matière thermoplastique de l'élément (13) de stabilisation mécanique, le revêtement de surface (16) étant réalisé dans un matériau comportant un produit compatible avec la matière thermoplastique de l'élément de stabilisation (13), la mise en forme de la nappe métallique comprenant une étape de pliage ou d'emboutissage, et
- on rapporte la matière thermoplastique constituant l'élément (13) de stabilisation mécanique, et **en ce que** :
- le revêtement de surface (16) et l'élément de stabilisation (13) comportent un produit commun,
- la nappe métallique (12) enduite du revêtement de surface (16) comporte une plage (20), dite plage libre, non couverte par l'élément de stabilisation (13) en matière thermoplastique, et
- la plage libre (20) sert d'interface de liaison avec un autre composant que l'élément de stabilisation (13).

2. Procédé selon la revendication 1, dans lequel l'élément de stabilisation (13) comprend une nervure de rigidification (14).

3. Procédé selon l'une quelconque des revendications 1 et 2, dans lequel l'élément de stabilisation (13) comprend une couche de matière plastique (18).

4. Procédé selon l'une quelconque des revendications 1 à 3, dans lequel on rapporte la matière thermoplastique par surmoulage de la nappe (12) pré-enduite.

5. Procédé selon l'une quelconque des revendications 1 à 4, dans lequel le revêtement de surface (16) comporte un produit liant et, du côté opposé à la nappe métallique (12), un film en matière thermoplastique réalisé dans le même matériau que l'élément de stabilisation (13), de façon à favoriser l'adhérence de l'élément de stabilisation sur le revêtement de surface (16).

6. Procédé selon l'une quelconque des revendications 1 à 5, dans lequel l'élément de stabilisation (13) est en polypropylène ou polyamide.

7. Procédé selon l'une quelconque des revendications 1 à 6, dans lequel le revêtement de surface (16) comporte du polypropylène ou du polyamide.

8. Procédé selon l'une quelconque des revendications 1 à 7, dans lequel l'enduction préalable de la nappe métallique (12) avec le revêtement de surface (16) est exécutée dès la fabrication de la nappe métallique (12).

9. Procédé selon l'une quelconque des revendications 1 à 7,dans lequel l'enduction préalable de la nappe métallique (12) avec le revêtement de surface (16) est exécutée immédiatement avant la mise en forme de la nappe métallique (12).

10. Pièce de structure (10) de véhicule automobile fabriquée par mise en oeuvre du procédé selon l'une quelconque des revendications 1 à 9.

11. Traverse de face avant technique selon la revendication 10.

12. Poutre de pare-chocs selon la revendication 10.

## Patentansprüche

1. Verfahren zur Herstellung eines Strukturteiles (10) eines Kraftfahrzeugs, wobei das Strukturteil eine metallische Bahn (12) aufweist, die durch ein Element (13) zur mechanischen Stabilisierung aus thermoplastischem Material stabilisiert wird, **dadurch gekennzeichnet, dass** das Verfahren die folgenden Schritte aufweist:
- man bringt die zuvor mit einem reaktivierbaren Oberflächenbelag (16) beschichtete metallische Bahn (12) in eine Form, wobei der Oberflächenbelag (16) als mechanische Verbindungsschicht mit dem thermoplastischen Material des Elementes (13) zur mechanischen Stabilisierung dient und wobei der Oberflächenbelag (16) aus einem Material hergestellt wird, das ein mit dem thermoplastischen Material des Elements (13) zur Stabilisierung kompatibles Produkt aufweist, das Einbringen der metallischen Bahn (12) in eine Form einen Schritt des Faltens oder des Ziehen umfasst,
- man bringt das thermoplastische Material, aus dem das Element (13) zur mechanischen Stabilisierung besteht, auf, und
- der Oberflächenbelag (16) und das Element (13) zur Stabilisierung weisen ein gemeinsames Produkt auf,
- die beschichtete metallische Bahn (12) mit dem Oberflächenbelag (16) weist einen als freien Bereich bezeichneten Bereich (20) auf, der nicht von dem Element (13) zur Stabilisierung aus thermoplastischem Material bedeckt ist, und
- ein freier Bereich (20) dient als Verbindungszwischenschicht mit einem verschiedenen Bauteil vom Element (13) zur Stabilisierung.

2. Verfahren nach Anspruch 1, bei dem das Element (13) zur Stabilisierung Rippen zur Versteifung (14) umfasst.

3. Verfahren nach einem der Ansprüche 1 und 2, bei dem das Element (13) zur Stabilisierung eine Schicht aus thermoplastischem Material (18) umfasst.

4. Verfahren nach einem der Ansprüche 1 bis 3, bei dem man das thermoplastische Material durch Aufpressen der vorab beschichteten Bahn (12) aufbringt.

5. Verfahren nach einem der Ansprüche 1 bis 4, bei dem der Oberflächenbelag (16) ein Bindeprodukt und auf der der metallischen Bahn (12) gegenüberliegenden Seite einen Film aus thermoplastischen Material aufweist, der aus demselben Werkstoff wie das Element (13) zur Stabilisierung hergestellt ist, so dass das Haftvermögen des Elements zur Stabilisierung auf dem Oberflächenbelag (16) verstärkt wird.

6. Verfahren nach einem der Ansprüche 1 bis 5, bei dem das Element (13) zur Stabilisierung aus Polypropylen oder aus Polyamid besteht.

7. Verfahren nach einem der Ansprüche 1 bis 6 bei dem der Oberflächenbelag (16) Polypropylen oder Polyamid aufweist.

8. Verfahren nach einem der Ansprüche 1 bis 7, bei dem das vorherige Beschichten der metallischen Bahn (12) mit dem Oberflächenbelag (16) im Zuge der Herstellung der metallischen Bahn (12) ausgeführt wird.

9. Verfahren nach einem der Ansprüche 1 bis 7, bei dem das vorherige Beschichten der metallischen Bahn (12) mit dem Oberflächenbelag (16) ausgeführt wird, unmittelbar bevor die metallische Bahn (12) in die Form gelegt wird.

10. Strukturteil (10) eines Kraftfahrzeugs, das durch die Ausführung des Verfahrens nach einem der Ansprüche 1 bis 9 hergestellt wird.

11. Vordere technische Außentraverse nach Anspruch 10.

12. Stoßfängerträger nach Anspruch 10.

## Claims

1. A method of fabricating a structural part (10) of a motor vehicle, the part comprising a metal sheet (12) stabilized by a mechanical stabilizer element (13) of thermoplastic material, the method comprising the following steps:
· shaping the metal sheet (12) that has previously been coated with a reactivatable surface covering (16) serving as a mechanical bonding interface with the thermoplastic material of the mechanical stabilizer element (13), the surface covering (16) being made of a material including a substance compatible with the thermoplastic material of the stabilizer element (13), in which shaping the metal sheet includes a step of folding or stamping; and
· applying thereto the thermoplastic material constituting the mechanical stabilizer element (13); wherein:
· the surface covering (16) and the stabilizer element (13) include a substance in common;
· the metal sheet (12) coated with the surface covering (16) includes an area (20) referred to as a free area that is not covered by the stabilizer element (13) of thermoplastic material; and
· the free area (20) serves as a bonding interface with a component other than the stabilizer element (13).

2. A method according to claim 1, in which the stabilizer element (13) comprises a stiffener rib (14).

3. A method according to anyone of claims 1 to 2, in which the stabilizer element (13) comprises a layer of plastics material (18).

4. A method according to anyone of claims 1 to 3, in which the thermoplastic material is applied by being overmolded onto the pre-coated sheet (12).

5. A method according to anyone of claims 1 to 4, in which the surface covering (16) comprises a binder, and on the side opposite from the metal sheet (12) a film of thermoplastic material made out of the same material as the stabilizer element (13), so as to encourage adhesion of the stabilizer element on the surface covering (16).

6. A method according to anyone of claims 1 to 5, in which the stabilizer element (13) is made of polypropylene or polyamide.

7. A method according to anyone of claims 1 to 6, in which the surface covering (16) comprises polypropylene or polyamide.

8. A method according to anyone of claims 1 to 7, in which the prior coating of the metal sheet (12) with the surface covering (16) is performed as soon as the metal sheet (12) is fabricated.

9. A method according to anyone of claims 1 to 7, in which the prior coating of the metal sheet (12) with the surface covering (16) is performed immediately prior to shaping the metal sheet (12).

10. A motor vehicle structural part (10) fabricated by implementing the method according to anyone of claims 1 to 9.

11. A front end module cross-member according to claim 10.

12. A bumper beam according to claim 10.
